# FASCICULE DE BREVET EUROPEEN

(11) **EP 4 185 528 B1**
(45) Date de publication et mention de la délivrance du brevet: **17.07.2024**
(21) Numéro de dépôt: 21740591.9
(22) Date de dépôt: 20.07.2021
(51) Int. Cl.: B64C 25/42, B60B 27/00, B60T 5/00, F16D 65/847, F16D 65/78

(54) **ENSEMBLE D'ÉCRAN THERMIQUE**
HITZESCHILDANORDNUNG
HEAT SHIELD ASSEMBLY

(30) Priorité: 21.07.2020 FR 2007663
(43) Date de publication de la demande: 31.05.2023
(73) Titulaire: Safran Landing Systems, 78140 Vélizy-Villacoublay (FR)
(72) Inventeur: MOLINE, Sylvain, 77550 MOISSY-CRAMAYEL (FR)
(74) Mandataire: Cabinet Boettcher
(86) Numéro de dépôt international: PCT/EP2021/070308
(87) Numéro de publication internationale: WO 2022/018103

(56) Documents cités:
- WO-A1-2009/082397
- CN-A- 106 763 353
- US-A- 4 084 857

## Description

L'invention concerne un écran thermique pour roue freinée d'aéronef équipé d'écarteurs pour empêcher tout contact entre la roue et l'écran thermique, notamment lorsque la roue est en rotation.

### ARRIERE PLAN DE L'INVENTION

Les roues des atterrisseurs principaux d'aéronef sont généralement équipées de freins qui comportent une pile de disques qui comprend des disques rotors alternant avec des disques stators et qui est logée à l'intérieur de la jante de la roue. Le dégagement de chaleur consécutif au frottement des disques entre eux lors d'un freinage peut être important, et il est connu d'équiper les jantes d'un écran thermique interposé entre une surface intérieure de la jante et les disques pour protéger la jante et le pneumatique porté par la jante de cet afflux de chaleur. L'écran thermique est généralement constitué de plusieurs tôles de métal très fines séparées par une mince lame d'air.

Lorsque la roue est en rotation, l'écran thermique est soumis à d'importants efforts tangentiels et inertiels qui pourraient provoquer un contact entre l'écran thermique et la roue. Un tel contact peut être préjudiciable pour la jante dont la surface intérieure est recouverte de peinture, notamment en cas de contact répété pouvant à terme entraîner une oxydation de la jante et donc une diminution de ses propriétés mécaniques.

Il est connu d'équiper l'écran thermique de plots (appelés aussi écarteurs) réalisés en matériau polymère pour empêcher tout contact entre l'écran thermique et la jante. Les plots comprennent généralement une base pourvue d'une gorge annulaire agencée pour être en prise avec un bord périphérique d'une ouverture circulaire de l'écran thermique.

Si de tels plots s'avèrent efficaces, ils se montrent particulièrement difficiles à insérer dans les ouvertures de l'écran thermique, ce qui oblige les opérateurs à utiliser un outil spécifique pour déformer la base des plots et ainsi permettre leur insertion dans les ouvertures de l'écran thermique. Qui plus est, une mauvaise utilisation de l'outil peut entraîner une détérioration du plot pouvant dégrader sa tenue sur l'écran thermique.

On connaît du document EP 2 687 742 un écran thermique comprenant une ouverture en forme de serrure dans laquelle est inséré un plot de forme rectangulaire. Si l'utilisation d'un outil spécifique n'est pas nécessaire pour la mise en place d'un tel plot sur l'écran thermique, sa forme allongée peut empêcher son installation dans un encombrement restreint et rendre difficile l'obtention d'un appui ponctuel avec l'écran thermique. Par ailleurs, un plot de grande longueur nécessite une ouverture de grande dimension qui aura pour effet de diminuer la rigidité de l'écran thermique mais aussi de réduire la protection thermique qu'il confère. Le document

WO2009082397 divulgue un autre exemple d'un écran thermique selon l'art antérieur.

### OBJET DE L'INVENTION

L'invention a donc pour objet de proposer un ensemble d'écran thermique permettant d'obvier, au moins en partie, aux problèmes précités.

### RESUME DE L'INVENTION

A cet effet, on prévoit un ensemble d'écran thermique pour roue freinée d'aéronef, comprenant un écran thermique et au moins un écarteur. L'écarteur comporte un corps principal s'étendant en saillie d'une surface externe de l'écran thermique et au moins un élément de bridage de forme globalement cylindrique s'étendant en saillie du corps et traversant perpendiculairement une ouverture de l'écran thermique. L'élément de bridage comprend une extrémité libre élargie de manière à former avec le corps une gorge annulaire en prise avec un bord périphérique de l'ouverture de l'écran thermique.

Selon l'invention, l'ouverture a une forme de goutte d'eau.

Une telle forme d'ouverture permet une mise en place de l'écarteur sur l'écran thermique sans outil spécifique. La mise en place s'en trouve également facilitée et les temps de maintenance diminués.

Selon un mode de réalisation particulier de l'invention, le bord périphérique de l'ouverture comprend une portion de cercle de grand diamètre et une portion de cercle de petit diamètre reliées entre elles par deux portions rectilignes identiques.

De manière particulière, l'ouverture a une longueur sensiblement égale à un diamètre de l'extrémité libre élargie de l'élément de bridage.

De manière particulière, la portion de cercle de grand diamètre de l'ouverture a un diamètre sensiblement égal à celui d'un fond de la gorge de l'écarteur.

De manière particulière, la gorge a une épaisseur supérieure ou égale à une épaisseur de l'écran thermique.

Selon une caractéristique particulière, le corps de l'écarteur comprend une portion cylindrique ayant une extrémité à partir de laquelle s'étend coaxialement l'élément de bridage et une extrémité opposée libre coiffée d'une calotte sphérique.

Selon une autre caractéristique particulière, l'écran thermique comprend deux ouvertures et l'écarteur comprend deux éléments de bridage, le corps de l'écarteur étant de forme allongée et comprenant deux extrémités chacune pourvue d'un des éléments de bridage coopérant avec une des ouvertures de l'écran thermique.

De manière particulière, les ouvertures de l'écran thermique présentent un même axe longitudinal de symétrie et pointent l'une vers l'autre.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
[Fig.1] la figure 1 est une vue en perspective d'une roue freinée d'aéronef équipé d'ensembles d'écran thermique selon un mode de réalisation particulier de l'invention ;
[Fig.2] la figure 2 est une vue en perspective d'un des ensembles d'écran thermique équipant la roue d'aéronef illustrée à la figure 1 ;
[Fig.3] la figure 3 est une vue détaillée d'une ouverture de l'écran thermique illustré à la figure 2 ;
[Fig.4] la figure 4 est une vue en coupe axiale d'un écarteur de l'ensemble illustré à la figure 2 ;
[Fig.5A] la figure 5A illustre une première étape de la mise en place d'un écarteur dans l'ouverture illustrée à la figure 4 ;
[Fig.5B] la figure 5B illustre une deuxième étape de la mise en place de l'écarteur ;
[Fig.5C] la figure 5C illustre une troisième étape de la mise en place de l'écarteur ;
[Fig.5D] la figure 5D illustre une quatrième étape de la mise en place de l'écarteur ;
[Fig.6] la figure 6 est une vue détaillée de deux ouvertures de l'écran thermique illustré à la figure 2, agencées en opposition ;
[Fig.7] la figure 7 est une vue illustrant la mise en place d'un écarteur dans les ouvertures illustrées à la figure 6.

### DESCRIPTION DETAILLEE DE L'INVENTION

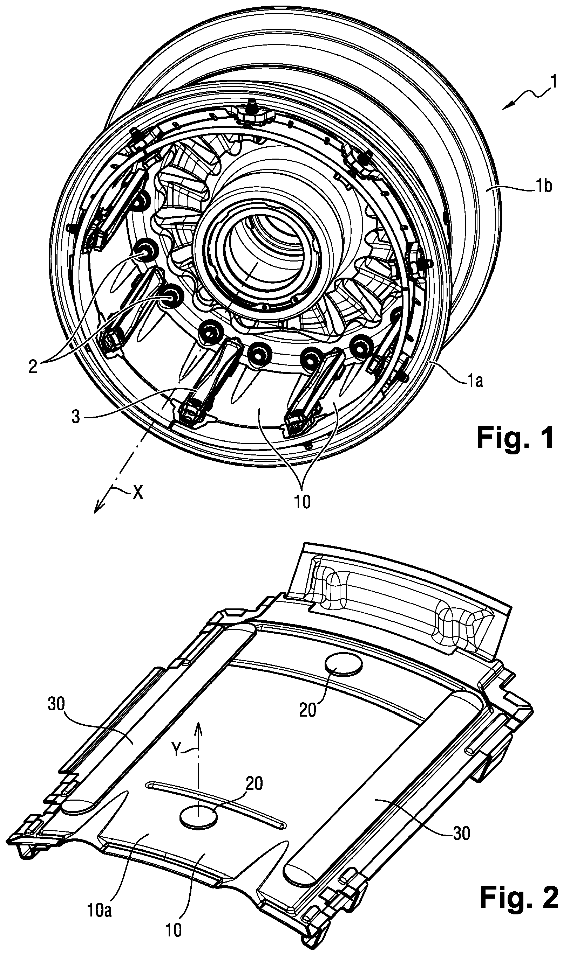

En référence à la figure 1, l'invention s'applique à une roue 1 d'aéronef, comportant ici deux demi-jantes 1a, 1b reliées par des boulons 2 pour porter un pneumatique (non représenté) . La roue 1 est munie de roulements pour son montage à rotation sur un essieu d'un atterrisseur d'aéronef, autour d'un axe X de rotation. La demi-jante 1a est creuse et reçoit des disques d'un frein, dont des disques rotor qui sont entraînés en rotation autour de l'axe X de rotation de la roue 1 par des barrettes 3 solidaire d'une surface cylindrique intérieure de la demi-jante 1a, et des disques stators qui sont enfilés sur un tube de reprise de couple de frein (non représenté) qui les empêche de tourner avec la roue 1. Un bouclier thermique, composé ici de plusieurs écrans thermiques 10 identiques s'étendant chacun entre deux barrettes, est disposé entre la demi-jante 1a et les disques pour protéger la roue 1 des radiations des disques chauds. Tout ceci est bien connu et n'est rappelé que pour situer l'invention.

Selon l'invention, l'écran thermique 10 est équipé d'écarteurs 20, 30 qui sont réalisés en matière polymère et qui s'étendent en saillie d'une face 10a de l'écran thermique 10 tournée vers la surface intérieure de la demi-jante 1a pour empêcher tout contact entre l'écran thermique 10 et la demi-jante 1a.

En référence à la figure 2, on peut distinguer deux types d'écarteurs : les écarteurs 20 de forme globalement cylindrique appelés « plots courts » qui assurent potentiellement un contact ponctuel avec la surface intérieure de la demi-jante 1a, et les écarteurs 30 de forme allongée appelés « plots longs » qui assurent potentiellement un contact linéaire avec ladite surface intérieure de la demi-jante 1a.

L'écran thermique 10 est équipé de deux plots longs 30 s'étendant chacun le long d'un bord longitudinal de l'écran thermique 10, et de deux plots courts 20 agencés entre les plots longs 30, l'un étant disposé entre les extrémités proximales des plots longs 30 et l'autre entre les extrémités distales desdits plots longs 30.

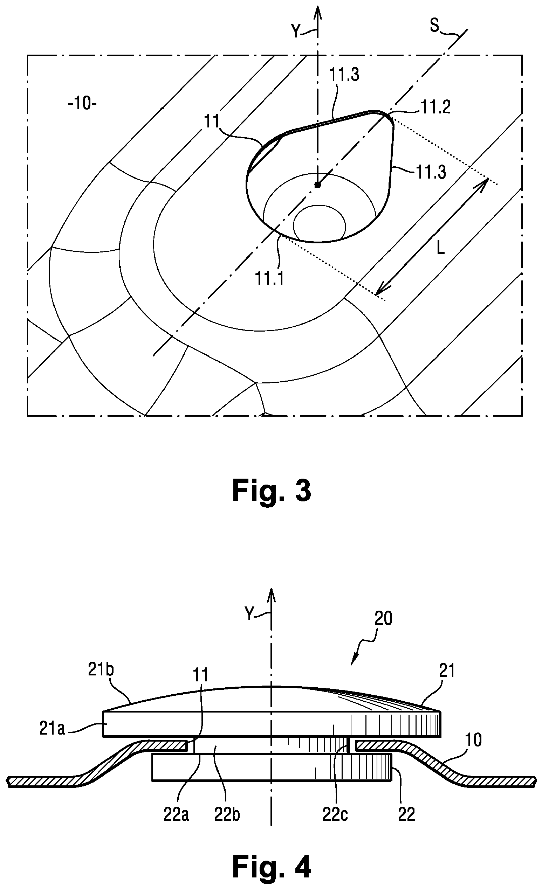

Chacun des plots courts 20 comprend un corps 21 principal s'étendant en saillie de la face de l'écran thermique 10 tournée vers la surface intérieure de la demi-jante 1a, selon un axe Y orthogonal à ladite face de l'écran thermique 10 (figure 4). Le corps 21 comprend une portion cylindrique 21a formant un disque d'axe Y dont une face libre est coiffée d'une calotte sphérique 21b pour générer un potentiel de contact ponctuel avec la surface intérieure de la demi-jante 1a.

Chacun des plots courts 20 comprend également un élément de bridage 22 s'étendant selon l'axe Y dans le prolongement du corps 21 et traversant une ouverture 11 de l'écran thermique 10. L'élément de bridage 22 comprend un disque de retenue 22a d'axe Y s'étendant en saillie d'une face de l'écran thermique tournée vers l'axe X de rotation de la roue 1. Le disque de retenue 22a est de diamètre légèrement inférieur à celui du corps 21 et est relié audit corps 21 via un disque de liaison 22b s'étendant coaxialement au disque de retenue 22a et au corps 21. Le disque de liaison 22b a un diamètre inférieur à celui du disque de retenue 22a et du corps 21, de manière à former avec ledit disque de retenue 22a et ledit corps 21 une gorge 22c annulaire en prise avec un bord périphérique de l'ouverture 11 de l'écran thermique 10. Le disque de liaison 22b a une épaisseur supérieure ou égale à celle de l'ouverture 11.

En référence aux figures 3 et 4, l'ouverture 11 a une forme de goutte d'eau et son bord périphérique comprend une première portion de cercle 11.1 ayant un diamètre sensiblement égal à celui du disque de liaison 22b de l'élément de bridage 22 et un centre appartenant à l'axe Y, et une deuxième portion de cercle 11.2 ayant un diamètre inférieur à celui de la première portion de cercle 11.1 et supérieur ou égal à l'épaisseur du disque de retenue 22a. Par exemple, le diamètre de la deuxième portion de cercle 11.2 et l'épaisseur du disque de retenue 22a sont respectivement égales à trois millimètres et deux millimètres. Les portions de cercle 11.1, 11.2 forment respectivement une première extrémité et une deuxième extrémité de l'ouverture 11 et sont reliées entre elles par des portions rectilignes 11.3 de longueur identique. Les extrémités des portions rectilignes 11.3 sont sensiblement tangentes aux extrémités des portions de cercle 11.1, 11.2.

L'ouverture 11 comprend un axe de symétrie S passant par les milieux des portions de cercle 11.1, 11.2 et l'axe Y. Les milieux des portions de cercle sont éloignés d'une distance sensiblement égale au diamètre du disque de retenue 22a de l'élément de bridage 22 et définissant une longueur L de l'ouverture 11.

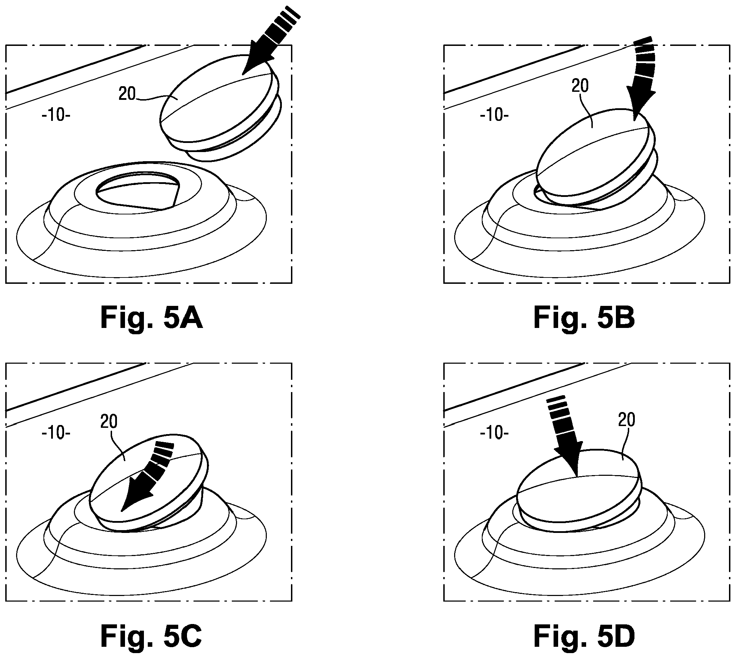

Pour mettre en place le plot court 20 dans l'ouverture 11, le plot court 20 est tout d'abord incliné d'un angle égal à 45 degrés environ par rapport à la face de l'écran thermique 10 tournée vers la surface intérieure de la demi-jante 1a (figure 5A), puis est approché de l'ouverture pour insérer le disque de retenue 22a dans la longueur L de l'ouverture 11 de manière à ce que la gorge 22c soit partiellement en prise avec une extrémité de la portion de cercle 11.1 (figure 5B). Une pression manuelle est ensuite exercée sur la portion sphérique 21b du plot court 20 jusqu'à ce que le disque de retenue 22a soit entièrement entré dans l'ouverture 11 et que le disque de liaison 22b coopère avec l'ouverture 11 en jouant sur la déformation du matériau polymère (figure 5C).

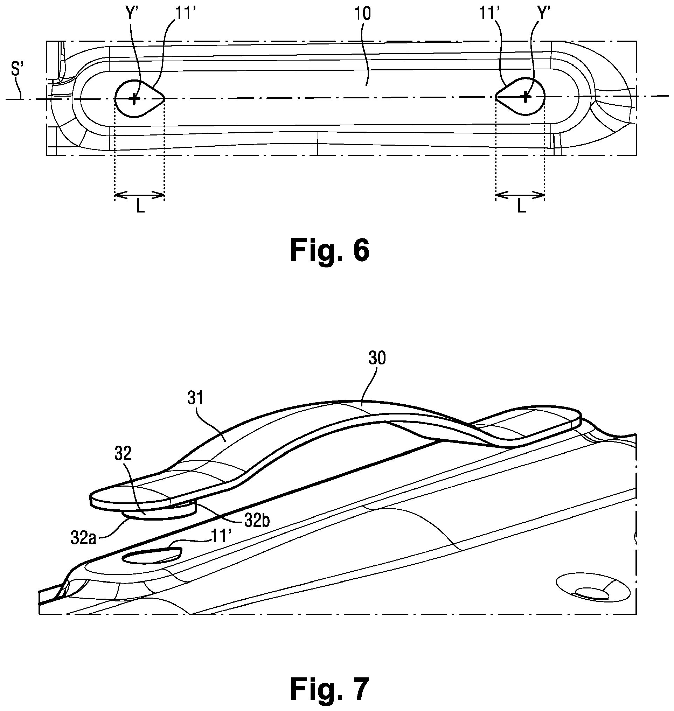

En référence aux figures 6 et 7, chacun des plots longs 30 comprend un corps principal 31 de forme allongée s'étendant en saillie de la face de l'écran thermique 10 tournée vers la surface intérieure de la demi-jante 1a, selon un axe Y' orthogonal à ladite face de l'écran thermique 10. Lorsque l'on regarde suivant l'axe Y', le corps 31 a la forme d'un rectangle muni aux extrémités de deux demi-cercles. Une face libre du corps est bombée de manière à assurer potentiellement un contact linéaire (ici rectiligne) avec la surface intérieure de la demi-jante 1a.

Chacun des plots longs 30 comprend également, à chaque extrémité du corps 31, un élément de bridage 32 s'étendant selon l'axe Y' et traversant une ouverture 11' de l'écran thermique 10 identique à l'ouverture 11. Les éléments de bridages 32 des plots longs 30 sont identiques aux éléments de bridage 22 des plots courts 20 et comprennent un disque de retenue 32a et un disque de liaison 32b en prise avec les ouvertures 11'.

On notera que les deux ouvertures 11' dans lesquelles sont insérés les plots longs 30 sont en opposition et pointent l'une vers l'autre de sorte qu'elles présentent un même axe de symétrie S' et leurs portions de cercle de petit diamètre sont en regard l'une de l'autre.

Pour mettre en place le plot long 30 sur l'écran thermique 10, on insère tout d'abord l'un des éléments de bridage 32 dans l'une des ouvertures 11' puis on tire légèrement sur le plot long 30 pour mettre en place l'autre élément de bridage 32 dans l'autre ouverture 11' en jouant sur la déformation du matériau polymère.

Bien entendu, l'invention n'est pas limitée aux modes de réalisation décrits mais englobe toute variante entrant dans le champ de l'invention telle que définie par les revendications.

Les écarteurs 20, 30 peuvent être réalisés en tout matériau approprié (silicone, matériau polymère synthétique, caoutchouc naturel, caoutchouc synthétique...)

Les écarteurs 20, 30 peuvent être fabriqués par toute méthode de fabrication appropriée (moulage par injection...) .

Les ouvertures 11, 11' peuvent être découpées directement dans l'écran thermique 10 (coupe par jet d'eau, laser...) mais aussi formées par estampage.

L'agencement des plots 20, 30 et des ouvertures 11, 11' peut différer de celui illustré aux figures 1-7.

Le nombre de plots 20, 30, la forme de leur corps 21, 31 et leurs dimensions peuvent être différent de ceux illustrés aux figures 1-7.

## Revendications

1. Ensemble d'écran thermique pour roue (1) freinée d'aéronef, comprenant un écran thermique (10) et au moins un écarteur (20, 30) qui comporte un corps (21, 31) principal s'étendant en saillie d'une surface externe de l'écran thermique et au moins un élément de bridage (22, 32) de forme globalement cylindrique s'étendant en saillie du corps et traversant perpendiculairement une ouverture (11, 11') de l'écran thermique, l'élément de bridage comprenant une extrémité libre élargie (22a, 32a) de manière à former avec le corps une gorge (22c) annulaire en prise avec un bord périphérique de l'ouverture de l'écran thermique, **caractérisé en ce que** l'ouverture a une forme de goutte d'eau.

2. Ensemble d'écran thermique selon la revendication 1, dans lequel le bord périphérique de l'ouverture (11, 11') comprend une portion de cercle de grand diamètre (11.1) et une portion de cercle de petit diamètre (11.2) reliées entre elles par deux portions rectilignes (11.3) identiques.

3. Ensemble d'écran thermique selon la revendication 2, dans lequel l'ouverture (11, 11') a une longueur (L) sensiblement égale à un diamètre de l'extrémité libre (22a, 32a) élargie de l'élément de bridage (22, 32).

4. Ensemble d'écran thermique selon la revendication 2 ou 3, dans lequel la portion de cercle de grand diamètre (11.1) de l'ouverture (11) a un diamètre sensiblement égal à celui d'un fond de la gorge (22c) de l'écarteur (20, 30).

5. Ensemble d'écran thermique selon l'une quelconque des revendications 2 à 4, dans lequel la portion de cercle de petit diamètre (11.2) de l'ouverture (11) a un diamètre supérieur ou égal à une épaisseur de l'extrémité libre (22a) élargie de l'élément de bridage (32).

6. Ensemble d'écran thermique selon l'une quelconque des revendications précédentes, dans lequel la gorge (22c) a une épaisseur supérieure ou égale à une épaisseur de l'écran thermique (10).

7. Ensemble d'écran thermique selon l'une quelconque des revendications précédentes, dans lequel le corps (21) de l'écarteur (20) comprend une portion cylindrique (21a) ayant une extrémité à partir de laquelle s'étend coaxialement l'élément de bridage (22) et une extrémité opposée libre coiffée d'une calotte sphérique (21b).

8. Ensemble d'écran thermique selon l'une quelconque des revendications 1 à 6, dans lequel l'écran thermique (10) comprend deux ouvertures et l'écarteur (30) comprend deux éléments de bridage, le corps (31) de l'écarteur (30) étant de forme allongée et comprenant deux extrémités chacune pourvue d'un des éléments de bridage (32) coopérant avec une des ouvertures (11') de l'écran thermique (10).

9. Ensemble d'écran thermique selon la revendication 8, dans lequel les ouvertures (11') de l'écran thermique (10) présentent un même axe longitudinal de symétrie (S) et pointent l'une vers l'autre.

## Patentansprüche

1. Hitzeschildanordnung für ein gebremstes Rad (1) eines Luftfahrzeugs, umfassend ein Hitzeschild (10) und mindestens einen Abstandshalter (20, 30), der einen Hauptkörper (21, 31) umfasst, der von einer Außenfläche des Hitzeschildes vorsteht, sowie mindestens ein Spannelement (22, 32) mit allgemein zylindrischer Form, das von dem Körper vorsteht und senkrecht durch eine Öffnung (11, 11') des Hitzeschildes hindurchgeht, wobei das Spannelement ein vergrößertes freies Ende (22a, 32a) umfasst, um mit dem Körper eine ringförmige Nut (22c) in Eingriff mit einem Umfangsrand der Öffnung des Hitzeschildes zu bilden, **dadurch gekennzeichnet, dass** die Öffnung die Form eines Wassertropfens hat.

2. Hitzeschildanordnung nach Anspruch 1, bei der der Umfangsrand der Öffnung (11, 11') einen Kreisabschnitt (11.1) mit großem Durchmesser und einen Kreisabschnitt (11.2) mit kleinem Durchmesser umfasst, die miteinander über zwei geradlinige identische Abschnitte (11.3) verbunden sind.

3. Hitzeschildanordnung nach Anspruch 2, bei der die Öffnung (11, 11') eine Länge (L) hat, die im Wesentlichen gleich einem Durchmesser des vergrößerten freien Endes (22a, 32a) des Spannelements (22, 32) ist.

4. Hitzeschildanordnung nach Anspruch 2 oder 3, bei der der Kreisabschnitt (11.1) der Öffnung (11) mit großem Durchmesser einen Durchmesser hat, der im Wesentlichen gleich dem eines Bodens der Nut (22c) des Abstandshalters (20, 30) ist.

5. Hitzeschildanordnung nach einem der Ansprüche 2 bis 4, bei der der Kreisabschnitt (11.2) der Öffnung (11) mit kleinem Durchmesser einen Durchmesser hat, der größer oder gleich einer Dicke des vergrößerten freien Endes (22a) des Spannelements (32) ist.

6. Hitzeschildanordnung nach einem der vorhergehenden Ansprüche, bei der die Nut (22c) eine Dicke hat, die größer oder gleich einer Dicke des Hitzeschildes (10) ist.

7. Hitzeschildanordnung nach einem der vorhergehenden Ansprüche, bei der der Körper (21) des Abstandshalters (20) einen zylindrischen Abschnitt (21a) umfasst, der ein Ende hat, ab dem sich koaxial das Spannelement (22) erstreckt, sowie ein entgegengesetztes freies Ende, das von einer Kugelkappe (21b) abgedeckt ist.

8. Hitzeschildanordnung nach einem der Ansprüche 1 bis 6, bei der das Hitzeschild (10) zwei Öffnungen umfasst und der Abstandshalter (30) zwei Spannelemente umfasst, wobei der Körper (31) des Abstandshalters (30) eine längliche Form hat und zwei Enden umfasst, die jeweils mit einem der Spannelemente (32) versehen sind, das mit einer der Öffnungen (11') des Hitzeschildes (10) zusammenwirkt.

9. Hitzeschildanordnung nach Anspruch 8, bei der die Öffnungen (11') des Hitzeschildes (10) eine selbe Längssymmetrieachse (S) aufweisen und zueinander zeigen.

## Claims

1. A heat shield assembly for a braked aircraft wheel (1), the assembly comprising a heat shield (10) and at least one spacer (20, 30) comprising both a main body (21, 31) projecting from an outwardly-facing surface of the heat shield and also a clamping element (22, 32) of generally cylindrical shape projecting from the body and passing perpendicularly through an opening (11, 11') in the heat shield, the clamping element having an enlarged free end (22a, 32a) so as to co-operate with the body to form an annular groove (22c) engaged with the peripheral edge of the opening in the heat shield, the heat shield assembly being **characterized in that** the opening has the shape of a drop of water.

2. A heat shield assembly according to claim 1, wherein the peripheral edge of the opening (11, 11') comprises both a larger-diameter circular portion (11.1) and a smaller-diameter circular portion (11.2), which portions are connected together by two identical rectilinear portions (11.3).

3. A heat shield assembly according to claim 2, wherein the opening (11, 11') has a length (L) that is substantially equal to the diameter of the enlarged free end (22a, 32a) of the clamping element (22, 32).

4. A heat shield assembly according to claim 2 or claim 3, wherein the larger-diameter circular portion (11.1) of the opening (11) is of diameter substantially equal to the diameter of the bottom of the groove (22c) in the spacer (20, 30).

5. A heat shield assembly according to any one of claims 2 to 4, wherein the smaller-diameter circular portion (11.2) of the opening (11) is of diameter greater than or equal to the thickness of the enlarged free end (22a) of the clamping element (32).

6. A heat shield assembly according to any preceding claim, wherein the groove (22c) is of thickness greater than or equal to the thickness of the heat shield (10).

7. A heat shield assembly according to any preceding claim, wherein the body (21) of the spacer (20) comprises a cylindrical portion (21a) having one end from which the clamping element (22) projects along the axis of the cylindrical portion and an opposite end that is free and covered by a spherical cap (21b).

8. A heat shield assembly according to any one of claims 1 to 6, wherein the heat shield (10) includes two openings, and the spacer (30) includes two clamping elements, the body (31) of the spacer (30) being elongate in shape and having two ends, each of which ends is provided with a respective one of the clamping elements (32) cooperating with a respective one of the openings (11') in the heat shield (10).

9. A heat shield assembly according to claim 8, wherein the openings (11') in the heat shield (10) present a common longitudinal axis of symmetry (S) and they point towards each other.
